(19) Europäisches Patentamt
European Patent Office
Office européen des brevets

(11) Numéro de publication: **0 241 340**
**B1**

(12) # FASCICULE DE BREVET EUROPEEN

(45) Date de publication du fascicule du brevet: **19.12.90**

(51) Int. Cl.[5]: **C 09 K 7/02,** E 21 B 43/25

(21) Numéro de dépôt: **87400628.1**

(22) Date de dépôt: **20.03.87**

(54) **Compositions aqueuses stabilisées de polymères hydrosolubles.**

(30) Priorité: **28.03.86 FR 8604513**

(43) Date de publication de la demande:
**14.10.87 Bulletin 87/42**

(45) Mention de la délivrance du brevet:
**19.12.90 Bulletin 90/51**

(84) Etats contractants désignés:
**AT DE FR GB NL**

(56) Documents cités:
**EP-A-0 103 779**
**US-A-3 288 211**
**US-A-3 372 749**
**US-A-3 964 972**

(73) Titulaire: **RHONE-POULENC CHIMIE**
**25, quai Paul Doumer**
**F-92408 Courbevoie Cédex (FR)**

(72) Inventeur: **Contat, François**
**7, chemin de Charbonnière**
**F-69130 Ecully (FR)**
Inventeur: **Boutin, Jean**
**7, rue Buzy**
**F-69780 Mions (FR)**

(74) Mandataire: **Tavernier, Colette et al**
**RHONE-POULENC INTERSERVICES Service**
**Brevets Chimie 25, Quai Paul Doumer**
**F-92408 Courbevoie Cédex (FR)**

**EP 0 241 340 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne la stabilisation contre la dégradation des polymères hydrosolubles de haut poids moléculaire utilisés comme additifs viscosifiants dans l'industrie pétrolière.

Les polymères hydrosolubles de haut poids moléculaire ont trouvé une application intéressante en raison de leurs propriétés viscosifiantes dans les fluides de forage, de reconditionnement de puits, de complétion ou dans les fluides d'injection pour la récupération assistée du pétrole. Parmi ces polymères les plus couramment utilisés sont les polyacrylamides, les hétéropolysaccharides, les hydroxyéthylcelluloses et les carboxyméthylcelluloses.

Un procédé bien connu pour extraire des quantités supplémentaires d'huile des réservoirs pétroliers consiste à injecter de l'eau dans la formation par des puits forés à cet effet. L'eau pousse devant elle une partie de l'huile vers le puits de production. Pour augmenter l'efficacité de la récupération, il est conventionnel d'épaissir l'eau à l'aide d'un polymère épaississant, dans le but d'accroître sa viscosité et de réduire sa mobilité à une valeur égale ou inférieure à celle de l'eau emprisonnée dans la roche (Procédé Polymer Waterflooding).

Les polyacrylamides, polysaccharides et dérivés cellulosiques sont bien connus, entre autres polymères, comme agents de contrôle de mobilité. Toutefois, un problème reconnu associé à l'emploi de ces polymères dans la récupération assistée du pétrole est leur tendance à la dégradation dans certaines conditions du gisement. Dès que la température dépasse 50°C il se produit, lors du parcours du fluide dans le gisement, qui peut atteindre ou même dépasser une durée d'un an, des phénomènes d'altération du polymère par coupure de la chaîne, provoquant une chute significative de la viscosité en quelques jours et affectant ainsi l'efficacité du procédé. Les mécanismes de la dégradation sont complexes et dépendent de nombreux facteurs tels que la chaleur, la salinité, le pH, la teneur en oxygène dissous, les bactéries.

Des solutions ont déjà été proposées pour résoudre les problèmes liés à la dégradation des hétéropolysaccharides utilisés comme agents de contrôle de mobilité.

Selon US—A—4141842 le liquide aqueux est stabilisé par addition d'un alcool aliphatique en $C_3$—$C_5$ et d'un carbonate de métal alcalin. D'après le procédé US—A—4218327 la solution est traitée par un dèsoxygénant puis additionnée d'un antioxydant contenant du soufre et d'un alcool oxydable soluble dans l'eau. Selon US—A—4425246 les solutions d'hétéropolysaccharides sont stabilisées par désoxygénation à l'aide d'un gaz inerte et/ou d'un agent désoxygénant puis traitées thermiquement et filtrées. Selon EP—A—0106665 et EP—A—0106666 les solutions salines de polysaccharide substantiellement libres d'oxygène dissous sont traitées par un borohydrure de métal alcalin ou par un dithionite, respectivement.

Il a été trouvé un mélange d'additifs permettant de stabiliser ou de minimiser la chute de viscosité des solutions de polymères hydrosolubles soumises à des conditions de température au moins égales à 50°C pendant une durée prolongée.

Selon l'invention, les compositions aqueuses contenant un polymère hydrosoluble de haut poids moléculaire en quantité suffisante pour accroître la viscosité de l'eau sont caractérisées en ce qu'elles contiennent un mélange stabilisant hydrosoluble constitué d'un alcool aliphatique inférieur, d'un composé aminocarboxylique ayant au moins un groupement

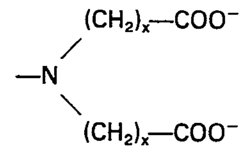

dans lequel x est un nombre entier de 1 à 4, et d'un composé chlorophénolique.

Bien que le polymère hydrosoluble puisse être tout polymère viscosifiant connu dans la technique et employé notamment dans les fluides de forage et comme additif de contrôle de mobilité dans la récupération tertiaire du pétrole, il est plus particulièrement choisi parmi les polyacrylamides et les hétéropolysaccharides.

Les polyacrylamides recouvrent une large classe d'homo- et copolymères obtenus à partir de monomères du groupe de l'acrylamide, méthacrylamide, acides acrylique et méthacrylique et leurs sels, acrylates et méthacrylates d'aminoalkyle éventuellement quaternisés. Ces polymères peuvent être préparés par des procédés en émulsion ou en solution et notamment par les procédés décrits dans FR—A—2348227, FR—A—2428054 et FR—A—2453185.

Les hétéropolysaccharides ou biopolymères sont obtenus par fermentation d'un hydrate de carbone sous l'action de bactéries appartenant au genre *Xanthomonas,* au genre *Arthrobacter,* au genre *Azobacter,* au genre *Agrobactérium,* au genre *Alcaligenes* ou de champignons appartenant au genre *Sclerotium.*

L'hétéropolysaccharide dénommé gomme xanthane obtenu par fermentation à l'aide d'une culture de *Xanthomonas* et plus particulièrement *X. campestris* est disponible commercialement. Les hétéropolysaccharides incluent les produits traités et/ou modifiés comme la gomme xanthane désacétylée, la gomme xanthane dépyruvatisée, la gomme xanthane réticulée par des cations polyvalents, les complexes gommeglyoxal etc... Le polysaccharide peut être utilisé sous forme du moût de fermentation lui-même ou sous forme de poudre isolée à partir du moût. On peut bien entendu utiliser des moûts qui ont été

concentrés et/ou clarifiés par toute méthode connue telle que ultrafiltration, traitement thermique, traitement enzymatique, centrifugation, filtration sur terres diatomées, etc....

La concentration de la solution en polymère hydrosoluble dépend des conditions d'utilisation et de la viscosité désirée. De manière générale, les solutions utilisées comme fluide de déplacement contiennent 0,01 à 3% de polymère. La solution aqueuse peut être réalisée avec de l'eau saline. De manière pratique, en récupération assistée du pétrole, on utilise souvent pour la dilution les eaux de gisement ou des eaux dont la salinité en est proche, par exemple des eaux de nappe aquifère.

La solution aqueuse est purgée au moyen d'un gaz inerte ou de gaz carbonique par toute technique connue, par exemple par bullage, de manière à maintenir une teneur minimale en oxygène dans la solution. Le polymère peut être dissous avant, pendant ou après le traitement par le gaz carbonique.

Les alcools aliphatiques capables de protéger le polymère hydrosoluble contre la chute de viscosité en combinaison avec les autres additifs comprennent les alcools linéaires ou ramifiés, de faible masse moléculaire, solubles dans l'eau, tels que les alcools en $C_3$—$C_5$ comme l'alcool allylique, l'alcool isopropylique, l'alcool n-butylique, l'alcool isobutylique, les alcools amyliques.

Comme composé aminocarboxylique utilisé conjointement avec l'alcool aliphatique et le composé chlorophénolique, on cite notamment les sels solubles dans l'eau et plus particulièrement les sels de métaux alcalins de l'acide nitrilotriacétique, de l'acide nitrilotripropionique, de l'acide diéthylènetriamine pentaacétique, de l'acide éthylènediamine tétraacétique. Ces composés sont généralement connus comme agents séquestrants des ions lourds. Des exemples de composé chlorophénolique sont les chlorophénols et leurs sels solubles dans l'eau tels que les chlorophénates de métal alcalin et plus particulièrement les trichlorophénates de sodium.

Les quantités d'alcool, de composé aminocarboxylique et de composé chlorophénolique peuvent varier dans le larges limites selon notamment la nature et la quantité du polymère hydrosoluble et la quantité d'oxygène dissous.

Généralement cependant, ces quantités sont comprises entre 0,01% et 2% pour l'alcool, entre 0,001% et 0,1% pour le composé aminocarboxylique et entre 0,01% et 0,5% pour le composé chlorophénolique, exprimées en poids par rapport au volume de la solution.

Les compositions de l'invention peuvent bien entendu comprendre des additifs usuels tels que des agents tensio-actifs et des biocides.

Les exemples suivants illustrent l'invention sans en limiter la portée.

Exemple 1

On prépare une eau de salinité suivante:

| | |
|---|---|
| $MgCl_2, 6H_2O$ | 74,4 mg/l |
| $CaCl_2, 2H_2O$ | 73,4 mg/l |
| NaCl | 1096,2 mg/l |
| $Na_2CO_3$ | 13,4 mg/l |
| $K_2CO_3$ | 31 mg/l |
| $FeCl_2, 2H_2O$ | 4,2 mg/l |
| $NaHCO_3$ | 1506,9 mg/l |
| eau distillée | q.s.l. |

On dissout dans cette eau 1 000 ppm de polyacrylamide RHODOFLOOD® AD 27 (commercialisé par la Société Rhône-Poulenc Spécialités Chimiques) qui est un copolymère d'acrylamide et d'acide acrylique.

La solution est désoxygénée par bullage de $CO_2$ pour amener la teneur en oxygène à une valeur inférieure à 500 ppb.

Une partie aliquote de la solution (témoin) est transférée dans des ampoules en verre borosilicaté qui sont scellées à la flamme et placées dans une enceinte thermostatée à 80°C.

Sur une autre partie aliquote de la solution, on ajoute, conformément à l'invention 3 000 ppm d'isobutanol, 200 ppm de 2,4,6-tri-chlorophénate de sodium et 100 ppm de diéthylènetriamine pentaacétate de sodium et la composition est vieillie à 80°C dans des ampoules comme pour le témoin.

Des ampoules sont ouvertes périodiquement et la viscosité de la solution est mesurée (viscosimètre Brookfield® modèle LVT muni d'un adaptateur UL—30°C—6 tours/min).

| | | | |
|---|---|---|---|
| Témoin | viscosité initiale | | 16,7 mPa · |
| | — | à 15 jours | 1,5 mPa · |
| Invention | viscosité initiale | | 16,7 mPa · |
| | — | à 6 mois | 16,3 mPa · |
| | | à 12 mois | 17 mPa · |

Exemple 2

On renouvelle l'exemple 1 en ajoutant à la solution contenant 1 000 ppm de polymère RHODOFLOOD®

AD 27: 6 000 ppm d'isobutanol, 200 ppm de 2,4,6-trichlorophénate de sodium et 100 ppm de diéthylène-triamine pentaacétate de sodium.

| | | |
|---|---|---|
| viscosité initiale | | 16,7 mPa · |
| — | à 6 mois | 20,9 mPa · |
| — | à 12 mois | 24,5 mPa · |

Exemple 3

On renouvelle l'exemple 1 en ajoutant comme mélange stabilisant 6 000 ppm d'isobutanol, 200 ppm de 2,4,6-trichlorophénate de sodium et 50 ppm de diéthylènetriamine pentaacétate de sodium.

| | | |
|---|---|---|
| viscosité initiale | | 16,7 mPa · |
| — | à 12 mois | 23,0 mPa · |

On note dans les exemples 2 et 3 une augmentation de la viscosité initiale que l'on suppose être due à l'hydrolyse partielle des fonctions acrylamides.

A titre comparatif, une série d'expériences est réalisée en utilisant une solution identique à celle de l'exemple 1 contenant 1000 ppm de RHODOFLOOD® AD 27 à laquelle on ajoute

| | |
|---|---|
| échantillon A: | Isobutanol 10 000 ppm |
| échantillon B: | 2,4,6-trichlorophénate de sodium 200 ppm |
| échantillon C: | diéthylènetriamine pentaacétate de sodium 100 ppm |
| échantillon D: | Isobutanol 6 000 ppm+2,4,6-trichlorophénate de sodium 200 ppm. |

Les viscosités mesurées périodiquement sont les suivantes:

| | A | B | C | D |
|---|---|---|---|---|
| 15 jours | 3,1 | 3,5 | 2,5 | 5,6 |
| 60 jours | 2,1 | 1,5 | 1,8 | 3,6 |

Exemple 4

On prépare une solution aqueuse contenant 1 000 ppm de polysaccharide Xanthane (RHODOFLOOD® XR de la Société Rhône-Poulenc Spécialitiés Chimiques) en utilisant pour la dilution une eau saline renfermant 100 g/l de Na Cl, 10 g/l de Ca $Cl_2$ et 10 g/l de $MgCl_2$.

La solution est désoxygénée par bullage à l'hélium puis est additionnée de 6 000 ppm d'isobutanol, 200 ppm de 2,4,6-trichlorophénate de sodium et 100 ppm de diéthylènetriamine pentaacétate de sodium.

La solution est vieillie à 80°C en ampoules scellées et la viscosité est mesurée de la manière indiquée à l'exemple 1.

| | | |
|---|---|---|
| viscosité initiale | | 52 mPa · s |
| — | 48 heures | 39,5 mPa · s |
| — | à 30 jours | 28,5 mPa · s |
| — | à 360 jours | 25 mPa · s |

La viscosité chute rapidement au cours des premiers jours mais elle se stabilise ensuite.

Les résultats sont identiques si l'on ajoute en outre à la solution modifiée par les additifs 500 mg/l de biocide Dimétridazole®.

**Revendications**

1. Compositions aqueuses contenant un polymère hydrosoluble de haut poids moléculaire en quantité suffisante pour accroître la viscosité de l'eau caractérisées en ce qu'elles contiennent un mélange stabilisant hydrosoluble constitué d'un alcool aliphatique inférieur, d'un composé aminocarboxylique ayant au moins un groupement

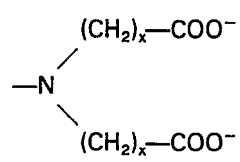

dans lequel x est un nombre entier de 1 à 4, et d'un composé chlorophénolique.

2. Compositions aqueuses selon la revendication 1 dans laquelle le polymère hydrosoluble est choisi parmi les polyacrylamides et les hétéropolysaccharides de haut poids moléculaire.

3. Compositions aqueuses selon la revendication 1 caractérisées en ce que l'alcool aliphatique inférieur est un alcool soluble dans l'eau en $C_3$—$C_5$ linéaire ou ramifié.

4. Compositions aqueuses selon la revendication 1 caractérisées en ce que le composé aminocarboxylique est choisi parmi les sels solubles dans l'eau de l'acide nitriloacétique, de l'acide nitrilopropionique, le l'acide diéthylènetriamine pentaacétique, de l'acide éthylènediamine tétraacétique.

5. Compositions selon la revendication 1 caractérisées en ce que le composé chlorophénolique est choisi parmi les chlorophénols et les chlorophénates de métal alcalin.

6. Compositions aqueuses selon l'une des revendications 1 à 5 caractérisées en ce que la quantité de polymère hydrosoluble est comprise entre 0,01 et 3% en poids.

7. Compositions aqueuses selon l'une des revendications 1 à 6 caractérisées en ce qu'elles contiennent entre 0,01 et 2% d'alcool inférieur, entre 0,001 et 0,1% de composé aminocarboxylique et entre 0,01 et 0,5% de composé chlorophénolique.

8. Utilisation des composition selon l'une des revendications 1 à 7 comme fluide de forage et fluide de contrôle de mobilité en récupération assistée du pétrole.

**Patentansprüche**

1. Wäßrige Mittel, enthaltend ein wasserlösliches Polymer mit hohem Molekulargewicht in einer ausreichenden Menge, um die Viskosität des Wassers zu erhöhen, dadurch gekennzeichnet, daß sie ein wasserlösliches stabilisierendes Gemisch enthalten, bestehend aus einem niederen aliphatischen Alkohol, einer Aminocarbonsäureverbindung mit mindestens einer Gruppe

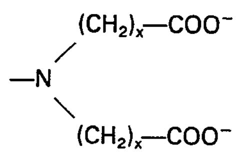

in der x eine ganze Zahl von 1 bis 4 ist, und eine Chlorphenolverbindung.

2. Wäßriges Mittel nach Anspruch 1, bei dem das wasserlösliche Polymer ausgewählt ist aus den Polyacrylamiden und den Heteropolysacchariden mit hohem Molekulargewicht.

3. Wäßriges Mittel nach Anspruch 1, dadurch gekennzeichnet, daß der niedere aliphatische Alkohol ein in Wasser löslicher linearer oder verzweigter $C_3$—$C_5$-Alkohol ist.

4. Wäßriges Mittel nach Anspruch 1, dadurch gekennzeichnet, daß die Aminocarbonsäureverbindung ausgewählt ist aus den in Wasser löslichen Salzen von Nitrilessigsäure, Nitrilpropionsäure, Diethylentriaminpentaessigsäure und Ethylendiamintetraessigsäure.

5. Mittel nach Anspruch 1, dadurch gekennzeichnet, daß die Chlorphenolverbindung ausgewählt ist aus den Chlorphenolen und den Chlorphenaten von Alkalimetall.

6. Wäßriges Mittel nach einem der Ansprüche 1 bis 5, dadurch gekennzeichnet, daß die Menge an wasserlöslichem Polymer zwischen 0,01 und 3 Gew.-% liegt.

7. Wäßriges Mittel nach einem der Ansprüche 1 bis 6, dadurch gekennzeichnet, daß sie 0,01 bis 2% niederen Alkohol, 0,001 bis 0,1% Aminocarbonsäureverbindung und 0,01 bis 0,5% Chlorphenolverbindung enthalten.

8. Verwendung der Mittel nach einem der Ansprüche 1 bis 7 als Bohrflüssigkeit und Flüssigkeit zur Steuerung der Beweglichkeit bei der sekundären bzw. tertiären Erdölgewinnung.

**Claims**

1. Aqueous compositions containing a high molecular weight water-soluble polymer in a quantity sufficient to increase the viscosity of water, characterized in that they contain a water-soluble stabilizing mixture consisting of a lower aliphatic alcohol, an aminocarboxylic compound containing at least one group

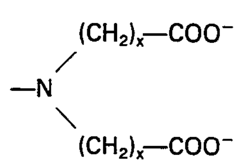

in which x is an integer from 1 to 4 and a chlorophenolic compound.

2. Aqueous compositions according to Claim 1 in which the water-soluble polymer is chosen from amongst high molecular weight polyacrylamides and heteropolysaccharides.

3. Aqueous compositions according to Claim 1, characterized in that the lower aliphatic alcohol is a straight-chain or branched, water-soluble $C_3$—$C_5$ alcohol.

4. Aqueous compositions according to Claim 1, characterized in that the aminocarboxylic compound is

chosen from amongst water-soluble salts of nitriloacetic acid, nitrilopropionic acid, diethylenetriamine pentaacetic acid and ethylenediamine tetraacetic acid.

5. Compositions according to Claim 1, characterized in that the chlorophenolic compound is chosen from amongst chlorophenols and alkali metal chlorophenates.

6. Aqueous compositions according to one of Claims 1 to 5, characterized in that the quantity of water-soluble polymer is between 0.01 and 3% by weight.

7. Aqueous compositions according to one of Claims 1 to 6, characterized in that they contain between 0.01 and 2% of lower alcohol, between 0.001 and 0.1% of aminocarboxylic compound and between 0.01 and 0.5% of chlorophenolic compound.

8. Use of the compositions according to one of Claims 1 to 7 as drilling fluid and mobility controlling fluid in enhanced oil recovery.